Europäisches Patentamt

**European Patent Office**

**Office européen des brevets**

(19)

(11) Numéro de publication: **0 288 701**
**B1**

(12) **FASCICULE DE BREVET EUROPEEN**

(45) Date de publication du fascicule du brevet:
**05.09.90**

(51) Int. Cl.⁵: **G01B 13/08**

(21) Numéro de dépôt: **88103847.5**

(22) Date de dépôt: **11.03.88**

(54) **Bague de mesure pneumatique.**

(30) Priorité: **16.03.87 CH 967/87**
**18.03.87 FR 8703790**

(43) Date de publication de la demande:
**02.11.88 Bulletin 88/44**

(45) Mention de la délivrance du brevet:
**05.09.90 Bulletin 90/36**

(84) Etats contractants désignés:
**DE GB IT**

(56) Documents cités:
**FR-A- 2 001 072**

(73) Titulaire: **MESELTRON S.A., Avenue Beauregard 14/18,**
**CH-2035 Corcelles(CH)**

(72) Inventeur: **Ecoffey, Olivier, Chemin des Uttins 2,**
**CH-2013 Colombier(CH)**
Inventeur: **Mueller, Théodore, Fin derrière Ville,**
**C-2516 Lamboing(CH)**
Inventeur: **Sigg, Hans, Charmettes 15,**
**CH-2006 Neuchâtel(CH)**

(74) Mandataire: **de Raemy, Jacques et al, ICB Ingénieurs**
**Conseils en Brevets SA Passage Max. Meuron 6,**
**CH-2001 Neuchâtel(CH)**

ACTORUM AG

## Description

La présente invention est relative à une bague de mesure pour appareil de mesure pneumatique du diamètre extérieur d'une pièce, bague comportant une zone d'entrée et un système de mesure par soufflage d'air.

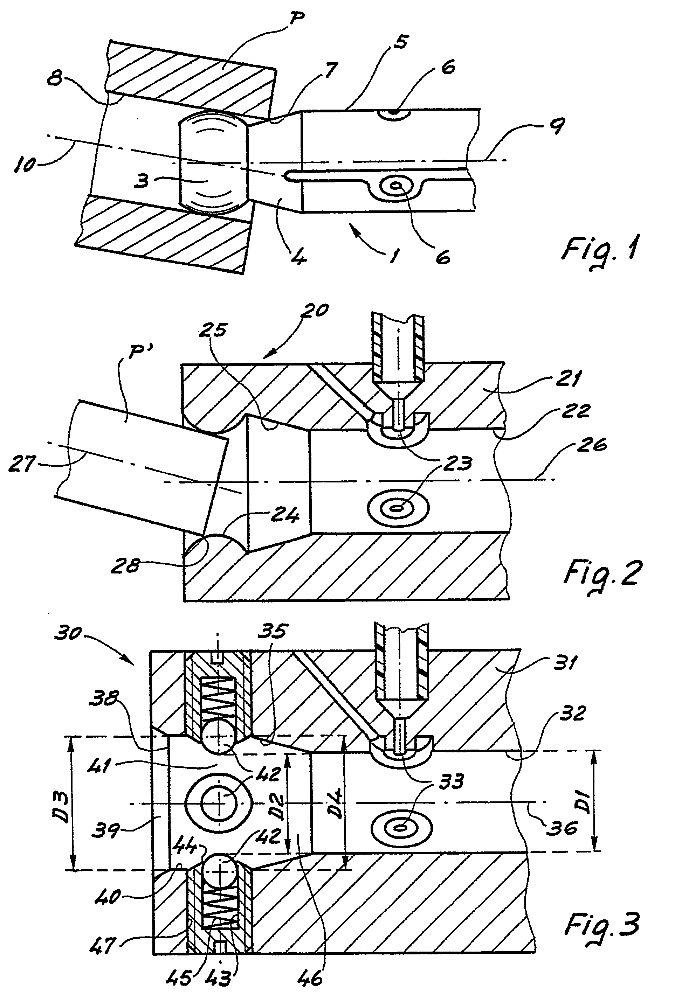

La figure 1 montre très schématiquement, en coupe axiale, un exemple de tête de mesure 1 que l'on utilise actuellement dans ce genre d'appareil lorsqu'il s'agit de mesurer simplement le diamètre d'un alésage cylindrique d'une pièce P.

La tête de mesure 1 comporte une zone d'entrée, formée par une partie sphérique 3 suivie d'une partie tronconique 4, et une zone de mesure définie par un cylindre de guidage 5 dans lequel est installé un système de mesure par soufflage d'air, système comportant ici des buses 6 reliées à une source d'air comprimé non représenté. Ce principe de mesure est connu et a été décrit par exemple dans le brevet US-A 4 538 449. On rappellera simplement ici qu'il suffit de mesurer le débit de l'air sortant des buses, ou la pression de cet air ou encore sa vitesse d'écoulement pour connaître la valeur du diamètre de l'alésage. Naturellement, pour cela il faudra aussi que l'appareil de mesure soit étalonné.

La tête de mesure ainsi brièvement décrite est toujours choisie en fonction de l'alésage de la pièce P à mesurer de façon que la distance entre la partie 5 de cette tête et la surface interne de la pièce P ne dépasse pas quelques dizaines de microns. La principale raison à agir ainsi est liée au principe physique utilisé. Une autre raison, c'est que très souvent la partie 5 est le seul moyen de guidage que l'on a pour déplacer et positionner correctement la tête à l'intérieur de l'alésage et s'assurer que les mesures que l'on effectue sont bien justes.

On vient de le dire, un jeu très faible existe entre la pièce à mesurer P et la tête de mesure 1 qui doit y être introduite, ce qui nécessite d'entrer la tête coaxialement à la pièce si l'on ne veut pas provoquer de coincements. Si cette mesure se fait à la main sur un grand nombre de pièces, l'alignement qu'il faut opérer entre tête et pièces ralentira la cadence de mesure et donc le nombre de pièces que l'on pourra mesurer par unité de temps.

Pour éviter cet inconvénient, la tête de mesure illustrée à la figure 1 présente une zone d'entrée particulière qui consiste à équiper la tête d'une partie sphérique 3 suivie d'une partie tronconique 4. Le rayon de la sphère 3 est choisi égal au rayon du cylindre 5. Ainsi la tête 1 peut aborder la pièce P sous un angle de désalignement important, par exemple 15° comme le montre la figure 1. La tête 1 pourra être introduite dans la pièce P jusqu'à ce que le bord 7 de l'alésage 8 vienne en contact avec le cône 4. En poursuivant le mouvement d'avance, le bord 7 va glisser le long du cône 4 jusqu'à ce que la partie cylindrique 5 de la tête pénètre à son tour dans l'alésage. A ce moment l'axe 9 de la tête de mesure sera coaxial à l'axe 10 de la pièce P et la tête pourra être introduite entièrement à l'intérieur de l'alésage.

Cette façon de réaliser la tête de mesure est connue et s'applique pour la mesure du diamètre intérieur de pièces. On va examiner maintenant l'homologue de ce dispositif qui consiste à mesurer, par la même méthode, le diamètre extérieur d'une pièce cylindrique. On se référencera pour cela à la figure 2.

La tête de mesure 20 est alors une bague qui comporte une partie tubulaire 21. La zone de mesure est ici constituée par un cylindre de guidage 22 dans lequel sont installées des buses à air comprimé 23. Comme dans le cas précédent, on s'arrange pour que le diamètre du cylindre de guidage soit légèrement supérieur de quelques dizaines de micromètres au diamètre de la pièce à mesurer P'.

Pour éviter le coincement de la pièce à mesurer, on va tenter d'appliquer à la bague de mesure le même dispositif d'entrée que celui qui a été décrit pour le manchon de la figure 1. On trouve à l'entrée de la bague une région torique 24 suivie d'une région tronconique 25. Le diamètre interne le plus étranglé du tore est fait égal au diamètre du cylindre de guidage 22. On se rend compte immédiatement qu'une pièce à mesurer P' introduite sous un certain angle dans la bague (ici quelques 15 degrés) va buter par son bord 28 contre la partie torique 24 et il faudra redresser la pièce P' pour que la pénétration puisse avoir lieu.

On fera observer que ce coincement se produira aussi pour des cas moins défavorables que celui qui est illustré par la figure 2. Comme le diamètre le plus étranglé du tore est légèrement plus grand que le diamètre de la pièce à mesurer P', cette pièce pourra passer le diamètre étranglé si l'angle d'incidence, formé par l'axe 26 de la bague et l'axe 27 de la pièce P', est faible. Après cela cependant un coincement peut prendre naissance, analogue à celui qui est connu de l'emmanchement conique du cône morse. En conclusion, le système d'entrée proposé pour un tampon pénétrant un alésage ne convient pas pour une bague dans laquelle doit être introduite un cylindre.

Une solution à ce problème va être donnée maintenant pour une bague de mesure, solution qui est caractérisée par le fait que la zone d'entrée est suivie d'une zone de mesure définie par un cylindre de guidage de ladite pièce dans lequel est installé ledit système de mesure, et que la zone d'entrée comporte, disposées les unes à la suite des autres dans le sens de pénétration de la pièce, une première région présentant une ouverture sensiblement plus grande que l'ouverture présentée par le cylindre de guidage, une seconde région comportant au moins trois moyens de guidage de ladite pièce qui définissent un cercle dont le diamètre est égal au diamètre d'ouverture du cylindre de guidage, chacun desdits moyens étant susceptibles d'être repoussés par la pièce à mesurer contre la force de rappel d'un ressort et une troisième région tronconique présentant un diamètre d'entrée sensiblement plus grand que le diamètre d'ouverture du cylindre de guidage et un diamètre de sortie égal au diamètre d'ouverture dudit cylindre de guidage.

L'invention sera mieux comprise à la lecture de la description qui suit et à l'examen de la figure 3 qui l'illustre et qui est un exemple d'exécution de ladite invention.

La figure 3 est un mode d'exécution de la bague de mesure généralement référencée par 30. Cette bague comporte un corps tubulaire 31. Comme pour la bague décrite à propos de la figure 2, la zone de mesure est constituée par un cylindre de guidage 32 de diamètre D1 dans lequel est installé un système de mesure par soufflage d'air représenté ici par deux buses 33. Comme auparavant, on s'arrange pour que le diamètre D1 soit légèrement supérieur au diamètre de la pièce à mesurer (non représentée ici). La zone de mesure est précédée par une zone d'entrée qui va être décrite dans le détail et qui constitue la caractéristique essentielle de l'invention.

La zone d'entrée de la pièce à mesurer comporte, disposées les unes à la suite des autres dans le sens de pénétration de la pièce d'abord une première région 38 présentant une ouverture D3 sensiblement plus grande que l'ouverture D1 présentée par le cylindre de guidage 32. Cette région 38 montre ici d'abord un cône d'entrée 39 suivi d'un cylindre 40 dont le diamètre est D3. On pourrait imaginer d'autres formes d'exécution, par exemple tronconique continue, la petite base de ce tronc de cône étant soustendue par le diamètre D3.

La zone d'entrée comporte ensuite une seconde région 41, comprenant au moins trois moyens de guidage 42 (quatre sur la figure 3) qui définissent un cercle dont le diamètre D2 est égal au diamètre D1 du cylindre de guidage 32. Tout à fait généralement ces moyens de guidage sont susceptibles d'être repoussés par la pièce à mesurer contre la force de rappel d'un ressort. Dans le cas particulier de la figure 3, les moyens de guidage 42 sont des billes emprisonnées chacune dans un tube pourvu d'un étranglement 44, la bille étant appuyée contre l'étranglement par la force de rappel du ressort 45. La figure 3 montre aussi que la pénétration de la bille dans la région 41 peut être réglée en vissant ou en dévissant les tubes 43 qui sont équipés de pas de vis. Grâce à ce réglage on comprend que les sommets des quatre billes 42 peuvent être amenés sur un cercle de diamètre D2 égal au diamètre D1.

La zone d'entrée comporte enfin une troisième région 46 qui se présente sous la forme d'un tronc de cône 35 dont le diamètre d'entrée D4 est sensiblement plus grand que le diamètre D1 du cylindre de guidage 32 et dont le diamètre de sortie est égal au diamètre D1 dudit cylindre de guidage. On remarque que cette troisième région est semblable à celle déjà décrite pour la figure 2.

On va expliquer maintenant comment se comporte une pièce si elle pénètre de coin dans la bague de mesure. En supposant qu'elle se présente comme la pièce P' de la figure 2, le bord 28 va venir buter contre la bille inférieure 42 et la fera s'escamoter partiellement dans le tube 43. De ce fait la pièce à mesurer pourra continuer son chemin jusqu'à ce que son même bord 28 vienne en contact avec le plan incliné du cône 35. En continuant sa course la pièce P' va se redresser et quand son extrémité va se présenter à l'entrée du cylindre de guidage 32, son axe 27 sera coaxial avec l'axe 36 du cylindre de guidage et la pièce pénétrera sans à coup dans ce cylindre jusqu'à l'endroit prévu pour la mesure.

L'invention qui vient d'être décrite permet une cadence de mesures élevée, donc un excellent rendement à la production et au contrôle des pièces. Cela sera tout particulièrement apprécié quand les pièces sont produites automatiquement, par exemple sur machine centerless où la cadence de mesure ne doit pas retarder la cadence de production.

On observera que les moyens de guidage choisis à la figure 3 sont des poussoirs à ressort qu'on peut acheter dans le commerce. Ces poussoirs sont pourvus d'un filet 47 grâce auquel ils peuvent être vissés dans un taraudage pratiqué dans la bague.

## Revendications

1. Bague de mesure (30) pour appareil de mesure pneumatique du diamètre extérieur d'une pièce, bague comportant une zone d'entrée (38, 41, 46) et un système de mesure par soufflage d'air (33), caractérisée par le fiat que la zone d'entrée (38, 41, 46) est suivie d'une zone de mesure définie par un cylindre de guidage (32) de ladite pièce dans lequel est installé ledit système de mesure, et que la zone d'entrée (38, 41, 46) comporte, disposées les unes à la suite des autres dans le sens de pénétration de la pièce, une première région (38) présentant une ouverture (D3) sensiblement plus grande que l'ouverture (D1) présentée par le cylindre de guidage, une seconde région (41) comportant au moins trois moyens de guidage (42) de ladite pièce qui définissent un cercle dont le diamètre (D2) est égal au diamètre d'ouverture (D1) du cylindre de guidage, chacun desdits moyens étant susceptibles d'être repoussés par la pièce à mesurer contre la force de rappel d'un ressort (45) et une troisième région (46) tronconique présentant un diamètre d'entrée (D4) sensiblement plus grand que le diamètre d'ouverture (D1) du cylindre de guidage et un diamètre de sortie égal au diamètre (D1) d'ouverture dudit cylindre de guidage.

2. Bague de mesure selon la revendication 1, caractérisé par le fait que lesdits moyens de guidage (42) sont des poussoirs à ressort vissés dans la seconde région (41) de la zone d'entrée (38, 41, 46) de la bague.

## Patentansprüche

1. Meßring (30) für eine Vorrichtung zum pneumatischen Messen des Außendurchmessers eines Teiles, welcher Ring eine Einlaßzone (38, 41, 46) und ein Luftgebläse-Meßsystem (33) umfaßt, dadurch gekennzeichnet, daß der Einlaßzone (38, 41, 46) eine Meßzone folgt, definiert durch einen Führungszylinder (32) des genannten Teils, in welchem das Meßsystem installiert ist, und daß die Einlaßzone (38, 41, 46) hintereinander in Eindringrichtung des Teiles umfaßt: Einen ersten Bereich (38) mit einer Öffnung (D3), die wesentlich größer ist als die Öffnung (D1), die der Führungszylinder aufweist, einen zweiten Bereich (41) mit mindestens drei Führungsmitteln (42) des genannten Teils, die einen Kreis definieren, dessen Durchmesser (D2) gleich dem Öffnungsdurchmesser (D1) des Führungszylinders ist, wobei jedes der Mittel von dem zu messenden Teil gegen die Rückstellkraft einer Feder (45) zurückschiebbar ist, und einen dritten, kegelstumpfförmigen Bereich mit einem Einlaßdurchmesser (D4), der wesentlich größer ist als der Öffnungsdurchmesser (D1) des Führungszylinders, und mit einem Auslaßdurchmesser im wesentlichen gleich dem Öffnungsdurchmesser (D1) des Führungszylinders.

2. Meßring nach Anspruch 1, dadurch gekennzeichnet, daß die Führungsmittel (42) Federstößel sind, eingeschraubt in den zweiten Bereich (41) der Einlaßzone (38, 41, 46) des Ringes.

**Claims**

1. A ring gauge (30) for a pneumatic apparatus for measuring the outer diameter of a part, such ring gauge including an entry zone (38, 41, 46) and an air jet measuring system (33), characterized by the fact that the entry zone (38, 41, 46) is followed by a measuring zone defined by a guide cylinder (32) of said part in which is installed said measuring system, and that the entry zone (38, 41, 46) includes, successively in the sense of penetration of the part, a first region (38) exhibiting an opening (D3) substantially larger than the opening (D1) exhibited by the guide cylinder, a second region (41) including at least three guide means (42) of said part which define a circle the diameter (D2) of which is equal to the diameter (D1) of the guide cylinder opening, each of said means being adapted to be spread apart against the return force of a spring (45) by the part being measured and a third tapered region (46) having an entry diameter (D4) substantially greater than that (D1) of the guide cylinder opening and an exit diameter equal to that (D1) of the guide cylinder opening.

2. A ring gauge according to claim 1, characterized by the fact that said guide means (42) comprise spring loaded pushpins screwed into the second region (41) of the ring gauge entry zone (38, 41, 46).

*Fig. 1*

*Fig. 2*

*Fig. 3*